# EUROPEAN PATENT SPECIFICATION

(11) **EP 0 587 582 B1**
(45) Date of publication and mention of the grant of the patent: **09.07.1997**
(21) Application number: 92908521.5
(22) Date of filing: 13.04.1992
(51) Int. Cl.: B32B 1/08

(54) **A FIBRE REINFORCED COMPONENT AND A METHOD OF MANUFACTURING SUCH A COMPONENT**
FASERVERBUNDWERKSTOFF UND VERFAHREN ZUR HERSTELLUNG VON FASERVERBUNDWERKSTOFF
CONSTITUANT RENFORCE PAR DES FIBRES ET SON PROCEDE DE FABRICATION

(30) Priority: 31.05.1991 GB 9027629
(43) Date of publication of application: 23.03.1994
(73) Proprietor: ROLLS-ROYCE plc, London, SW1E 6AT (GB)
(72) Inventor: ANGUS, James Pears, Worthington, Leicestershire LE6 5RN (GB)
(74) Representative: Gunn, Michael Alan
(86) International application number: GB9200666
(87) International publication number: WO9221515

(56) References cited:
- FR-A- 2 455 980
- GB-A- 2 063 209
- US-A- 4 183 232
- US-A- 4 492 096

## Description

This invention relates to fibre reinforced components and to a method of manufacturing such components.

In the manufacture of fibre reinforced components, it is common practice to place the fibres in a given configuration and then impregnate them with a suitable matrix material. The configuration of the fibres can have an important effect upon the mechanical strength of the component. It is therefore critically important that the fibres are initially placed and then maintained in the appropriate configuration.

One example of a component in which fibre configuration is important is an aerofoil blade, such as a compressor blade, for a gas turbine engine. Typically such aerofoil blades are manufactured by building up several layers of fibres before impregnating them with a suitable matrix material. Ideally the fibres in each layer should be at different angles to those in adjacent layers. One way of achieving this is to stack layers of fibres so that the fibres in each layer are at the desired angle. However this typically results in an aerofoil blade having leading and trailing edges which are defined by fibre ends. Such an aerofoil blade does not have particularly good strength characteristics.

An alternative way of ensuring that the fibres are placed in the appropriate configuration is to weave them three dimensionally e.g. US-A-4 492 096. This is unattractive however from the point of view of cost.

It is an object of the present invention to provide a fibre reinforced component and to a method of manufacturing such a component in which the aforementioned problems are substantially avoided.

According to one aspect of the present invention, a fibre reinforced component comprises a plurality of layers of fibre in a matrix material, said layers of fibres successively surrounding one another, each layer being constituted by a fabric initially woven in the form of a tube said fabric being so woven that each of said fibres is generally helically disposed with respect to the longitudinal axis of its tube, at least one of said fabric tubes having been deformed after weaving to alter the configuration of its fibres.

According to a further aspect of the present invention, a method of manufacturing a fibre reinforced component comprises the steps of producing a plurality of layers of fibres, said layers of fibres successively surrounding one another, each layer being constituted by a fabric initially woven in the form of a tube said fabric being so woven that each of said fibres is generally helically disposed with respect to the longitudinal axis of its tube, at least one of said fabric tubes having been deformed after weaving to alter the configuration of its fibres, and subsequently impregnating said fibres with a matrix material.

The present invention will now be described, by way of example, with reference to the accompanying drawings in which:
Figures 1-5 illustrate the various stages in the manufacture of a fibre reinforced component in accordance with the present invention.
Figure 6 is a view of a fibre reinforced component in accordance with the present invention.
Figure 7 is a close-up view of a portion of the component shown in Figure 6.

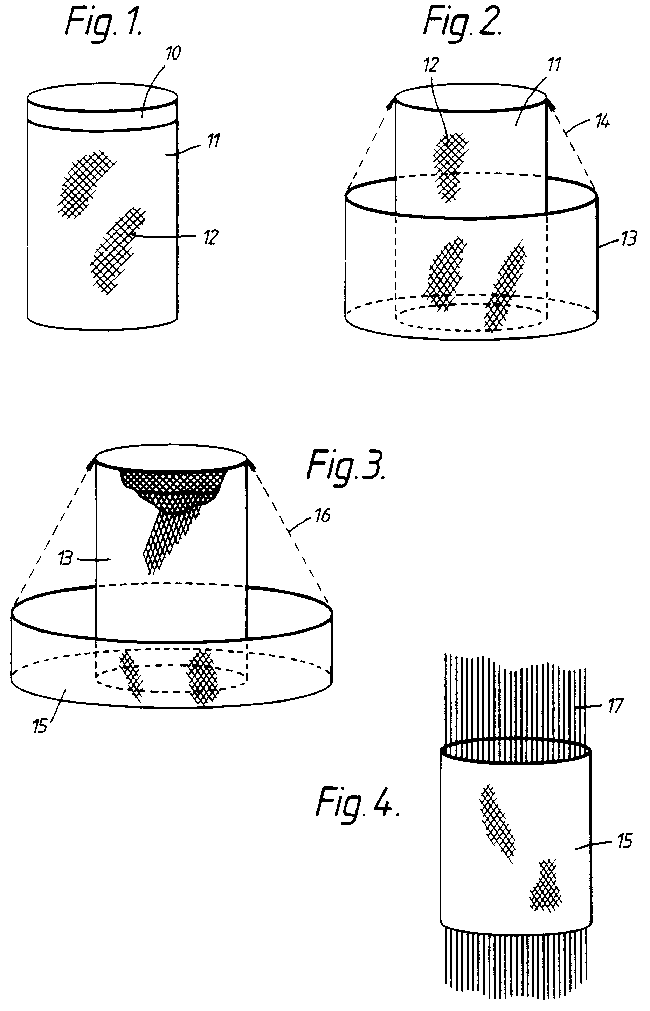

Referring to Figure 1, a cylindrical mandrel 10 is provided upon which is mounted a fabric tube 11. The fabric tube 11 is woven in such a way that the fibres which constitute its fabric are, as can be seen in the representative area 12, generally normal to each other and inclined at an angle of 45^{o} to the longitudinal axis of the mandrel 10.

The fabric tube 11 is subsequently surrounded by a further fabric tube 13 as can be seen in figure 2. The fabric tube 13 is woven in the same manner as the fabric tube 11 i.e. so that its fibres are generally included at an angle of 45^{o} to the longitudinal axis of the mandrel 10. Its diameter however is greater than that of the fabric tube 11. This is to permit the fabric tube 13 to be deformed by axial elongation as indicated by the arrows 14 so that its diameter reduces until that it engages and thereby overlies the fabric tube 11. As a result of the axial elongation of the tube 13, the inclination of its fibres change from their original inclination of 45^{o}. Specifically the original diameter of the fabric tube 13 is chosen so that when it is axially elongated and overlies the fabric tube 11 its fibres are generally inclined at an angle of 35^{o} to the longitudinal axis of the mandrel 10.

The fabric tube 13 is then surrounded by yet another fabric tube 15 as can be seen in Figure 3. As in the case of the fabric tube 13, the fabric tube 15 is woven in the same manner as the fabric tube 11 so that its fibres are inclined at an angle of 45^{o} to the longitudinal axis of the mandrel 10. However its diameter is greater than the original diameter of the fabric tube 13. Specifically its diameter is sufficiently large to ensure that when the fabric tube 15 is deformed by axial elongation as indicated by the arrows 16 so as to cause it to overlie the tube 13, its fibres are inclined at an angle of 25^{o} to the longitudinal axis of the mandrel 10.

The fabric tubes 11,13 and 15 are then removed from the mandrel 10 as an assembly and a plurality of undirectional fibres 17 are located within the innermost fabric tube 11 as shown in Figure 4 to define a central core. It will be appreciated of cause that a central core of a different material could be used if so desired.

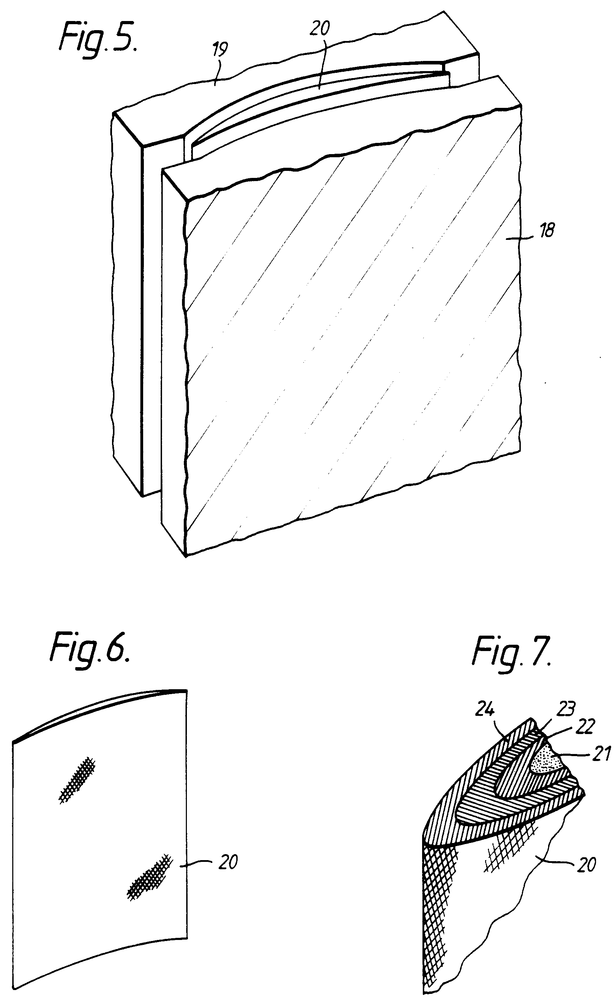

The whole assembly is then placed between the two halves 18 and 19 of a die as shown in Figure 5, and impregnated, by for instance injection, with an appropriate matrix material. The two die halves 18 and 19 are then urged together to form a component 20 from the fibres and matrix material.

The die halves 18 and 19 are so configured that the component 20 which they form is of aerofoil shape as can be seen in Figure 6. It will be appreciated however that components of other configuration could be produced if so desired.

It will be seen from Figure 7 that the aerofoil shape component 20 is made up of a core 21 of the undirectional fibres 17, a first layer 22 formed from the fabric tube 11, a second layer 23 formed from the fabric tube 13 and a third layer 24 formed from the fabric tube 15. Moreover as a result of the axial distortion of the fabric tubes 13 and 14, the fibres in the layers 22,23 and 24 are inclined at different angles to each other; the angles being determined by the original and final fabric tube diameters.

Clearly therefore, the aerofoil shape component 20 is made up of a number of layers, each produced from a woven fabric tube which has been axially elongated to incline its fibres to particular desired angles. The particular angles chosen will, of course, be chosen to achieve specific desired characteristics in the aerofoil shape component 20. Generally, however, it is essential that the fibres in the originally woven tube are so disposed as to be generally helically disposed with respect to the tube longitudinal axis.

Although the present invention has not been described with reference to specific fibres and matrix materials, it will be readily apparent to those skilled in the art that the particular choice will be dictated by the intended function of the particular component produced. Thus the fibre could be organic or inorganic as indeed could the matrix material.

## Claims

1. A fibre reinforced component comprising a plurality of layers of fibres (11,13,15) in a matrix material, characterised in that said layers of fibres (11,13,15) successively surround one another and than each layer (11,13,15) is constituted by a fabric initially woven in the form of a tube, said fabric being so woven that each of said fibres is generally helically disposed with respect to the longitudinal axis of its tube (11,13,15), at least one of said fabric tubes (11,13,15) having been deformed after weaving to alter the configuration of its fibres.

2. A fibre reinforced component as claimed in claim 1 characterised in that said at least one fabric tube (11) is so deformed by increasing its length.

3. A fibre reinforced component as claimed in claim 1 or claim 2 characterised in that said layers of fibres (11,13,15) surround a core member (21).

4. A fibre reinforced component as claimed in claim 3 characterised in that said core member (21) is constituted by a plurality of unidirectional fibres (17).

5. A fibre reinforced component as claimed in any one preceding claim characterised in that said fibre reinforced component is of aerofoil configuration.

6. A method of manufacturing a fibre reinforced component comprising the steps of producing a plurality of layers of fibres (11,13,15), characterised in that said layers of fibres (11,13,15) successively surround one another and that each layer is constituted by a fabric initially woven in the form of a tube, said fabric being so woven that each of said fibres is generally helically disposed with respect to the longitudinal axis of its tube (11,13,15), deforming at least one of said fabric tubes (11,13,15) after weaving to alter the configuration of its fibres, and subsequently impregnating said fibres with a matrix material.

7. A method of manufacturing a fibre reinforced component as claimed in claim 6 characterised in that said at least one fabric tube (11) is so deformed by increasing its length.

8. A method of manufacturing a fibre reinforced component as claimed in claim 6 or claim 7 characterised in that said plurality of layers of fibres (11,13,15) are produced by sequentially applying said fabric tubes (11,13,15) to a common mandrel (10) whereupon said mandrel (10) is removed prior to said impregnation of said fibres with said matrix material.

9. A method of manufacturing a fibre reinforced component as claimed in claim 8 characterised in that a core member (21) is positioned within the innermost of said fabric tubes (11,13,15) subsequent to the removal of said fabric tubes (11,13,15) from said mandrel (10) and prior to said impregnation.

10. A method of manufacturing a fibre reinforced component as claimed in claim 9 characterised in that said core member (21) is constituted by a plurality of unidirectional fibres (17).

11. A method of manufacturing a fibre reinforced component as claimed in any one of claims 6 to 10 characterised in that said component is formed in a die (18,19) subsequent to said impregnation.

12. A method of manufacturing a fibre reinforced component as claimed in any one of claims 6 to 11 characterised in that said component is of aerofoil configuration.

## Patentansprüche

1. Faserverstärktes Bauteil mit mehreren Faserstoffschichten (11, 13, 15), eingebettet in einem Matrixmaterial,
dadurch gekennzeichnet, daß die Faserstoffschichten (11, 13, 15) einander sukzessive umschließen und daß jede Schicht (11, 13, 15) durch ein Faserstoffmaterial gebildet ist, das ursprünglich in Form eines Rohres verwebt ist, und daß das Faserstoffmaterial so verwebt ist, daß jede Faser allgemein schraubenlinienförmig um die Längsachse seines Rohres (11, 13, 15) verläuft, und daß wenigstens eines der Faserstoffrohre (11, 13, 15) nach der Verwebung deformiert wird, um die Konfiguration seiner Fasern zu ändern.

2. Faserverstärktes Bauteil nach Anspruch 1,
dadurch gekennzeichnet, daß das wenigstens eine Faserstoffrohr (11) durch Streckung und Vergrößerung seiner Länge deformiert wird.

3. Faserverstärktes Bauteil nach Anspruch 1 oder 2,
dadurch gekennzeichnet, daß die Faserstoffschichten (11, 13, 15) einen Kern (21) umschließen.

4. Faserverstärktes Bauteil nach Anspruch 3,
dadurch gekennzeichnet, daß der Kern (21) von einer Vielzahl von in einer Richtung verlaufenden Fasern (17) gebildet ist.

5. Faserverstärktes Bauteil nach einem der vorhergehenden Ansprüche,
dadurch gekennzeichnet, daß das faserverstärkte Bauteil eine stromlinienförmige Gestalt besitzt.

6. Verfahren zur Herstellung eines faserverstärkten Bauteils, bei dem mehrere Faserstoffschichten (11, 13, 15) erzeugt werden,
dadurch gekennzeichnet, daß die Faserstoffschichten (11, 13, 15) sukzessive einander umschließen und daß jede Schicht durch ein Faserstoffmaterial gebildet ist, das anfänglich in Form eines Rohres verwebt ist, und daß das Faserstoffmaterial so verwebt ist, daß jede der Fasern allgemein schraubenlinienförmig gegenüber der Längsachse des Rohres (11, 13, 15) angeordnet ist, und daß wenigstens eines der Faserstoffrohre (11, 13, 15) nach dem Verweben deformiert wird, um die Konfiguration seiner Fasern zu ändern, und daß schließlich die Fasern mit einem Matrixmaterial imprägniert werden.

7. Verfahren zur Herstellung eines faserverstärkten Bauteils nach Anspruch 6,
dadurch gekennzeichnet, daß das wenigstens eine Faserstoffrohr (11) durch Vergrößerung seiner Länge deformiert wird.

8. Verfahren zur Herstellung eines faserverstärkten Bauteils nach Anspruch 6 oder 7,
dadurch gekennzeichnet, daß mehrere Faserstoffschichten (11, 13, 15) dadurch erzeugt werden, daß aufeinanderfolgend die Faserstoffrohre (11, 13, 15) auf einem gemeinsamen Kern (10) aufgebracht werden, worauf der Kern (10) entfernt wird, bevor die Faserstoffschichten mit Matrixmaterial imprägniert werden.

9. Verfahren zur Herstellung eines faserverstärkten Bauteils nach Anspruch 8,
dadurch gekennzeichnet, daß ein Kern (21) innerhalb des innersten Faserstoffrohres (11, 13, 15) angeordnet wird, nachdem die Faserstoffrohre (11, 13, 15) vom Kern (10) abgenommen worden sind und bevor die Imprägnierung erfolgt.

10. Verfahren zur Herstellung eines faserverstärkten Bauteils nach Anspruch 9,
dadurch gekennzeichnet, daß der Kern (21) durch eine Vielzahl von in einer Richtung verlaufenden Fasern (17) gebildet ist.

11. Verfahren zur Herstellung eines faserverstärkten Bauteils nach einem der Ansprüche 6 bis 10,
dadurch gekennzeichnet, daß das Bauteil in einem Formgesenk (18, 19) nach der Imprägnierung verformt wird.

12. Verfahren zur Herstellung eines faserverstärkten Bauteils nach einem der Ansprüche 6 bis 11,
dadurch gekennzeichnet, daß das Bauteil eine stromlinienförmige Gestalt aufweist.

## Revendications

1. Composant renforcé avec de la fibre comprenant une pluralité de couches de fibres (11, 13, 15) dans un matériau de matrice, caractérisé en ce que lesdites couches de fibres (11, 13, 15) s'entourent successivement l'une de l'autre et en ce que chaque couche (11, 13, 15) est constituée par un tissu initialement tissé sous la forme d'un tube, ledit tissu étant tissé de telle sorte que chacune desdites fibres est disposée généralement hélicoïdalement par rapport à l'axe longitudinal de son tube (11, 13, 15), au moins un desdits tubes de tissu (11, 13, 15) ayant été déformé après tissage pour modifier la configuration de ses fibres.

2. Composant renforcé avec de la fibre selon la revendication 1, caractérisé en ce que ledit au moins un tube de tissu (11) est déformé de manière à augmenter sa longueur.

3. Composant renforcé avec de la fibre selon la revendication 1 ou 2, caractérisé en ce que lesdites couches de fibres (11, 13, 15) entourent un élément de noyau (21).

4. Composant renforcé avec de la fibre selon la revendication 3, caractérisé en ce que ledit élément de noyau (21) est constitué par une pluralité de fibres unidirectionnelles (17).

5. Composant renforcé avec de la fibre selon l'une quelconque des revendications précédentes, caractérisé en ce que ledit composant renforcé avec de la fibre a une configuration aérodynamique.

6. Procédé de fabrication d'un composant renforcé avec de la fibre comprenant les étapes de produire une pluralité de couches de fibres (11, 13, 15), caractérisé en ce que lesdites couches de fibres (11, 13, 15) s'entourent successivement l'une de l'autre et en ce que chaque couche est constituée par un tissu initialement tissé sous la forme d'un tube, ledit issu étant tissé de telle sorte que chacune desdites fibres est disposée généralement hélicoïdalement par rapport à l'axe longitudinal des tubes (11, 13, 15), de déformer au moins un desdits tubes de tissu (11, 13, 15) après tissage pour modifier la configuration de ses fibres, et d'imprégner ensuite lesdites fibres avec un matériau de matrice.

7. Procédé de fabrication d'un composant renforcé avec de la fibre selon la revendication 6, caractérisé en ce que ledit au moins un tube de tissu (11) est déformé de manière à augmenter sa longueur.

8. Procédé de fabrication d'un composant renforcé avec de la fibre selon la revendication 6 ou la revendication 7, caractérisé en ce que ladite pluralité de couches de fibres (11, 13, 15) est produite en appliquant séquentiellement lesdits tubes de tissu (11, 13, 15) sur un mandrin commun (10), après quoi ledit mandrin (10) est retiré avant ladite imprégnation desdites fibres avec ledit matériau de matrice.

9. Procédé de fabrication d'un composant renforcé avec de la fibre selon la revendication 8, caractérisé en ce qu'un élément de noyau (21) est positionné à l'intérieur du tubes de tissu (11, 13, 15) situé le plus à l'intérieur après le retrait desdits tubes de tissu (11, 13, 15) dudit mandrin (10) et avant l'imprégnation.

10. Procédé de fabrication d'un composant renforcé avec de la fibre selon la revendication 9, caractérisé en ce que ledit élément de noyau (21) est constitué par une pluralité de fibres unidirectionnelles (17).

11. Procédé de fabrication d'un composant renforcé avec de la fibre selon l'une quelconque des revendications 6 à 10, caractérisé en ce que ledit composant est formé dans une matrice (18, 19) après ladite imprégnation.

12. Procédé de fabrication d'un composant renforcé avec de la fibre selon l'une quelconque des revendications 6 à 11, caractérisé en ce que ledit composant a une configuration aérodynamique.
